# EUROPÄISCHE PATENTANMELDUNG

(11) **EP 1 249 982 A2**
(43) Veröffentlichungstag der Anmeldung: **16.10.2002**
(21) Anmeldenummer: 02004209.9
(22) Anmeldetag: 25.02.2002
(51) Int. Cl.: H04L 29/06, H04L 12/66, H04M 11/00

(54) **Vorrichtung und Verfahren zur Datenkommunikation, insbesondere zur Parametrisierung und Fernüberwachung von Heizungsanlagen**

(30) Priorität: 26.02.2001 DE 10109196
(71) Anmelder: Viessmann Werke GmbH & Co, 35107 Allendorf (DE)
(72) Erfinder: Daffner, Klaus-Josef, Dr., 61440 Oberursel (DE); Heinmöller, Gerhard, 35279 Neustadt (DE); Hoffmann, Jörg, 35108 Allendorf (DE); Ciliox, Andreas, 35713 Eschenburg (DE)
(74) Vertreter: Beetz & Partner Patentanwälte

(57) **Zusammenfassung**

Die Erfindung betrifft eine Vorrichtung und ein Verfahren zur Datenkommunikation zwischen einem Systemrechner (8) und Gebäudetechnikeinrichtungen (2, 3, 4) für eine flexible und komfortable Parametrisierung und Fernüberwachung der Einrichtungen (2, 3, 4), wobei auf eine vorhandene Kommunikationsinfrastruktur zurückgegriffen werden kann, um den Verkabelungsaufwand zu reduzieren und eine kostengünstige Datenkommunikation zu ermöglichen. Die Vorrichtung weist einen Systemrechner (8), der zur Übertragung von Daten nach einem ersten Datenübertragungsprotokoll geeignet ist, mindestens eine Einrichtung (2, 3, 4), die zur Übertragung von Daten nach einem zweiten Datenübertragungsprotokoll geeignet ist, einen Protokollkonverter (1), der mit dem Systemrechner (8) verbunden ist und der Daten des ersten Datenübertragungsprotokolls in Daten des zweiten Datenübertragungsprotokolls und umgekehrt konvertiert, und ein Bussystem (5), an das die Einrichtungen (2, 3, 4) und der Protokollkonverter (1) anschließbar sind, auf.

## Beschreibung

Die Erfindung betrifft eine Vorrichtung und ein Verfahren zur Datenkommunikation zwischen einem Systemrechner und Gebäudetechnikeinrichtungen für eine flexible und komfortable Parametrisierung und Fernüberwachung der Einrichtungen, wobei auf eine vorhandene Kommunikationsinfrastruktur zurückgegriffen werden kann, um den Verkabelungsaufwand zu reduzieren.

Moderne Heizungsanlagen benötigen für ihren Betrieb eine Vielzahl von Parameter, die bei der Inbetriebnahme der Anlage eingestellt und während des Betriebs überwacht werden müssen. Insbesondere bei großen Heizungsanlagen ist eine Vielzahl von unterschiedlichen Einrichtungen, beispielsweise auf einem Betriebsgelände, auf verschiedene Standorte verteilt. So sind beispielsweise die Daten von Brennern, Wärmepumpen, Wärmezählern und einer Vielzahl von Temperatursensoren für die Steuerung einer Heizungsanlage zu erfassen. Meist wird für die Datenübertragungsverbindung all dieser Einrichtungen ein Haus- oder Feldbus eingesetzt. Mit Hilfe eines solchen Bussystems, das beispielsweise innerhalb eines Gebäudes installiert ist, können die für die automatische Steuerung einer Heizungsanlage notwendigen Daten zwischen den verschiedenen Einrichtungen der Anlage übertragen werden. Eine Vielzahl solcher, meist herstellerabhängigen Bussysteme ist bekannt.

Der Einsatz dieser speziellen Haus- oder Feldbussysteme ist jedoch meistens auf ein einzelnes Gebäude beschränkt. Für große Anlagen, die auf mehrere Standorte verteilt sind und von einer zentralen Leitstelle aus gewartet und überwacht werden sollen, sind Haus- oder Feldbussysteme nicht geeignet.

Ein Hausbussystem, beispielsweise zur Vernetzung einer Mehrkesselanlage, erfordert zudem eine spezielle Verkabelung, was meist einen beträchtlichen Aufwand in der Gebäudeinstallation bedeutet. Weiterhin werden spezielle Wartungs- und Konfigurationsterminals zum Anschluß an das jeweilige Hausbussystem benötigt. Durch die Vielzahl von unterschiedlichen Hausbussystemen kann ein großer Mehraufwand in der Verkabelung und in den bereitzuhaltenden Geräten entstehen. Auf der anderen Seite ist in den meisten Büro- und Betriebsgebäuden bereits eine Kommunikationsinfrastruktur, meist in Form einer Telefon- und Datenübertragungsverkabelung, vorhanden.

Eine Aufgabe der vorliegenden Erfindung ist es, eine Vorrichtung und ein Verfahren zur Datenkommunikation zwischen Einrichtungen, insbesondere Heizungs-, Klima- und/oder Kühlanlagen, und einem Systemrechner zu schaffen, die eine flexible und komfortable Wartung, Parametrisierung und Fernüberwachung der Einrichtungen ermöglicht. Insbesondere soll dabei auf eine bereits bestehende Kommunikationsinfrastruktur zurückgegriffen werden können, um den Aufwand für die benötigte Verkabelung zu reduzieren und eine kostengünstige Datenkommunikation zu ermöglichen.

Die Aufgabe wird durch die Merkmale der unabhängigen Patentansprüche gelöst. Die abhängigen Patentansprüche zeigen vorteilhafte Ausführungsformen und Weiterentwicklungen der Erfindung auf.

Erfindungsgemäß kann eine Vorrichtung zur Datenkommunikation, insbesondere zur Parametrisierung und Fernüberwachung von Heizungsanlagen, einen Systemrechner, mindestens eine Gebäudetechnikeinrichtung, einen Protokollkonverter und ein Bussystem aufweisen. Durch eine solche Vorrichtung kann eine Vielzahl von unterschiedlichen, in der Gebäudetechnik verwendeten Einrichtungen auf einfache Weise von dem Systemrechner überwacht und gewartet werden, wobei auf eine vorhandene Kommunikationsinfrastruktur zurückgegriffen werden kann, um den Verkabelungsaufwand zu reduzieren.

Der Systemrechner ist zur Übertragung von Daten nach einem ersten Datenübertragungsprotokoll geeignet. Der Systemrechner kann eine Software zur Parametrierung und Fernüberwachung der Einrichtungen aufweisen. Der Systemrechner kann in einer zentralen Leitstelle für die Überwachung und Fernwartung von Heizungsanlagen angeordnet sein. Es kann sich jedoch auch um ein mobiles Gerät handeln, das vor Ort zur Parametrisierung und Wartung einer Heizungsanlage eingesetzt wird. Die auf dem Systemrechner eingesetzte Software, die Benutzungsoberfläche für die Bedienung und die Art der Datenübertragung können jedoch in beiden Fällen gleich sein.

Die Einrichtungen sind zur Übertragung von Daten nach einem zweiten Datenübertragungsprotokoll geeignet. Durch die Übertragung von Daten zwischen den Einrichtungen und dem Systemrechner können die Einrichtungen parametrisiert und überwacht werden. Die Einrichtungen der Vorrichtung können räumlich integriert, beispielsweise in einem Einbaurahmen oder einem Einbauschrank, angeordnet sein oder sie können sich an räumlich verschiedenen Orten, beispielsweise in einem Gebäude verteilt, befinden. Es wird eine Vielzahl von unterschiedlichen Einrichtungen auf diese Weise parametrisier- und überwachbar.

Der Protokollkonverter konvertiert Daten des ersten Datenübertragungsprotokolls in Daten des zweiten Datenübertragungsprotokolls und umgekehrt. Er ist mit dem Systemrechner beispielsweise über eine Datenübertragungsverbindung verbunden. Der Protokollkonverter wandelt die vom Systemrechner empfangenen Daten des ersten Datenübertragungsprotokolls in Daten des zweiten Datenübertragungsprotokolls um. Auf der anderen Seite wandelt der Protokollkonverter von den Einrichtungen empfangene Daten des zweiten Datenübertragungsprotokolls in Daten des ersten Datenübertragungsprotokolls um. Der Protokollkonverter kann ein räumlich eigenständiges Gerät sein oder mit anderen Einrichtungen der Vorrichtung in einem Einbaurahmen oder Einbauschrank integriert sein. Der Protokollkonverter verbindet das Bussystem mit dem Systemrechner und nimmt die elektrische und logische Anpassung zwischen dem Bussystem und der Datenübertragungsverbindung zu dem Systemrechner vor. Der Protokollkonverter kann für eine Vielzahl von verschiedenen Bussystemen und Datenübertragungsverbindungen ausgestaltet sein. Er ermöglicht einen einfachen, flexiblen und modularen Anschluß des Systemrechners an unterschiedliche Einrichtungen und Bussysteme und erlaubt einen einheitlichen Aufbau des Systemrechners und seiner Software.

Das Bussystem verbindet die Einrichtungen der Vorrichtung und den Protokollkonverter. Das Bussystem kann der Datenübertragung zwischen den einzelnen Einrichtungen der Gebäudetechnik untereinander und zu dem Protokollkonverter dienen. Die Busteilnehmer können beispielsweise Meßwerte übertragen, Kommandos zur Steuerung und Regelung der Anlagen austauschen und Nachrichten für Diagnosezwecke versenden. Die an das Bussystem anschließbaren Einrichtungen können Heizungs-, Klima- und/ oder Kühlanlagen sein. Weiterhin können Meß- oder Steuereinrichtungen für den Betrieb von Heizungs-, Klima- und/oder Kühlanlagen an das Bussystem angeschlossen werden. Beispielsweise können Wärmezähler und/oder Temperaturfühler an das Bussystem angeschlossen werden. Die an das Bussystem angeschlossenen Einrichtungen können einfach und komfortabel von dem Systemrechner parametrisiert, überwacht und/oder gewartet werden. Durch den Protokollkonverter kann das spezielle und lokal begrenzte Bussystem auf einfache Weise mit der allgemeinen Kommunikationsinfrastruktur verbunden werden. Eine spezielle Verkabelung zwischen den Einrichtungen bzw. dem Bussystem und dem Systemrechner, der sich beispielsweise weit von den Heizungsanlagen entfernt in einer zentralen Leitstelle befindet, ist nicht notwendig. Durch die Protokollkonvertierung kann der Systemrechner mit unterschiedlichen Bussystemen und verschiedensten Einrichtungen betrieben werden. Der Aufbau und die Funktion des Systemrechners kann beispielsweise für unterschiedlichste Heizungsanlagen gleich sein.

Das Bussystem kann ein Haus- oder Feldbus in verschiedenen Ausführungsarten sein. Das zweite Datenübertragungsprotokoll kann ein LON-Protokoll sein. Die LON-Busteilnehmer können miteinander kommunizieren und Daten austauschen.

Ein erfindungsgemäßer Protokollkonverter kann auch zusätzliche analoge oder digitale Ein- und Ausgänge zum direkten Anschluß von Einrichtungen ohne das Bussystem aufweisen. Die digitalen Eingänge können beispielsweise den Zustand yon angeschlossenen Geräten erfassen. Die analogen Eingänge können bevorzugt zur Erfassung von Meßwerten, z.B. durch Anschluß von Temperatursensoren, vorgesehen sein. Durch die Ausgänge, beispielsweise Relais-Ausgänge, können angeschlossene Geräte gesteuert werden. Durch die direkten Ein- und Ausgänge des Protokollkonverters können Einrichtungen, die keine Busschnittstelle aufweisen, von der erfindungsgemäßen Vorrichtung zur Datenkommunikation überwacht und gesteuert werden. Der Protokollkonverter kann dazu die Funktion einer virtuellen, am Bussystem angeschlossenen Einrichtung übernehmen, die wie die anderen Einrichtungen vom Systemrechner fernüberwacht, parametrisiert und gesteuert wird.

Das erste Datenübertragungsprotokoll kann ein Protokoll auf der Basis des Internetprotokolls IP sein. Insbesondere sind das Simple Network Management Protocol SNMP, das Hypertext Transport Protocol HTTP, das Transport Control Protocol TCP oder das LonWorks Network Protocol als Transportprotokolle möglich. Durch den Einsatz dieser Standard-Protokolle als erste Datenübertragungsprotokolle der Vorrichtung wird eine einfache und kostengünstige Entwicklung und Herstellung der Vorrichtung ermöglicht. Der Einsatz dieser Protokolle ist auf vielen Netzwerken für die Datenübertragung, beispielsweise in Local Aerea Networks LAN mit Ether. net, Tokenring oder Glasfaserverbindungen und auch für Datenfernübertragungen, beispielsweise über Telefonleitungen, möglich.

Der Protokollkonverter kann in vorgegebenen zeitlichen Abständen vorbestimmte Daten von den Einrichtungen abfragen, speichern, an den Systemrechner senden und/oder zur Abfrage vom Systemrechner bereithalten. Die vorbestimmten Daten und die vorgegebenen zeitlichen Abstände zu deren Abfrage können bei der Konfiguration des Protokollkonverters anlagenspezifisch von dem Anlagenerbauer oder - betreiber eingestellt werden. Beispielsweise kann bei der Konfiguration des Protokollkonverters eine Liste der abzufragenden Einrichtungen und Daten angelegt werden. Diese Daten können Anlagedaten wie beispielsweise die Einstellung der Be dien- und Konfigurationsdaten der Geräte, Störungsmeldungen, Verfahrensdaten, Wartungsdaten und/oder Meßdaten von beispielsweise Wärmezählern sein. Der Protokollkonverter kann die abgefragten Daten speichern und beispielsweise zur Abfrage vom Systemrechner bereithalten. Der Protokollkonverter kann auch selbständig Daten an den Systemrechner senden, ohne auf eine Abfrage vom Systemrechner zu warten. Dies kann insbesondere geschehen, wenn die abgefragten Daten Fehler- oder Alarmmeldungen enthalten, auf einen fehlerhaften Zustand einer Einrichtung oder auf andere außergewöhnliche Ereignisse schließen lassen. Die Einrichtungen können auch selbständig Nachrichten an den Protokollkonverter senden, die von dem Protokollkonverter an den Systemrechner weitergeleitet oder zwischengespeichert und zur Abfrage vom Systemrechner bereitgehalten werden. Der Protokollkonverter dient der Verbindung aller an das Bussystem angeschlossenen Einheiten mit dem Systemrechner. Er sammelt die von den Einrichtungen abgesendeten oder abgefragten Daten, wertet sie aus und leitet sie an den Systemrechner weiter.

Der Protokollkonverter kann einen Speicher für die von den Einrichtungen abgefragten oder abgesendeten Daten aufweisen. In diesem Speicher können beispielsweise die Konfigurationsdaten und Betriebszustände der Einrichtungen, Wartungs-, Störungs- oder Diagnosemeldungen gespeichert werden. Die gespeicherten Daten liegen für eine Abfrage vom Systemrechner bereit. Die vom Systemrechner angeforderten Daten können somit unmittelbar an den Systemrechner übertragen werden, ohne daß zuerst eine Rückfrage an die entsprechende Einrichtung zur Ermittlung der gewünschten Daten erfolgen muß. Die einzelnen Daten können auch kombiniert und in größeren Datenpaketen an den Systemrechner übertragen werden, was die Effizienz der Datenübertragung zu dem Systemrechner erhöht und die Kosten für die Datenübertragung reduzieren kann.

Der Protokollkonverter kann vom Systemrechner empfangene Daten, die für eine bestimmte Einrichtung bestimmt sind, über das Bussystem an die entsprechende Einrichtung senden. Der Protokollkonverter empfängt beispielsweise Kommandos für eine Heizungsanlage und leitet diese an die entsprechende Einrichtung weiter. Dabei können vorteilhafterweise auch mehrere Kommandos in einem Datenpaket des ersten Datenübertragungsprotokolls gemeinsam vom Systemrechner an den Protokollkonverter übertragen werden. Der Protokollkonverter kann die unterschiedlichen Kommandos des empfangenen Datenpaketes separieren und an die einzelnen Einrichtungen weiterleiten. In der Gegenrichtung können beispielsweise viele einzelne Meßwerte von verschiedenen Einrichtungen zu einem Datenpaket kombiniert werden und über das erste Datenübertragungsprotokoll vom Protokollkonverter zum Systemrechner übertragen werden. Auf diese Weise läßt sich der Aufwand für die Datenübertragung zwischen Systemrechner und Protokollkonverter deutlich reduzieren.

Die Datenübertragung zwischen Protokollkonverter und Systemrechner kann beispielsweise mittels Datenverschlüsselung vor einem unbefugten Abhören gesichert werden. Auch kann die Abfrage von Daten und das Übermitteln von Kommandos durch den Austausch von Schlüsseln oder Zugangskennungen gegen unbefugte Benutzung gesichert werden. Weiterhin kann beispielsweise nur der Zugriff eines be5stimmten, bei der Konfiguration des Protokollkonverters festgelegten Systemrechners, auf den Protokollkonverter zugelassen werden. Auf diese Weise können nur registrierte und berechtigte Systeme bzw. Benutzer Zugriff auf die Einrichtungen erlangen.

Der Protokollkonverter kann eine vorbestimmte Verbindung aktivieren und/oder eine vorgegebene Nachricht versenden, wenn von einer der Einrichtungen eine Störungs- oder Wartungsmeldung. Insbesondere kann der Protokollkonverter ein Fax, eine Email, eine SMS-Nachricht oder eine Sprachnachricht an einen vorbestimmten Empfänger versenden. Wenn von einer der Einrichtungen eine Störungs- oder Wartungsmeldung vom Protokollkonverter abgefragt oder von diesem empfangen wird, kann der Protokollkonverter versuchen eine Verbindung zum Systemrechner aufzubauen, um die Meldung weiterzuleiten. Ist dies aus verschiedensten Gründen nicht möglich, beispielsweise weil der Systemrechner oder die Datenübertragungsverbindung zu dem Systemrechner ausgefallen ist oder eine Störung aufweist, kann der Protokollkonverter nach einer bestimmten Anzahl von Versuchen eine vorbestimmte Notverbindung aktivieren. Der Protokollkonverter kann beispielsweise eine Verbindung zu einem anderen Systemrechner aufbauen oder ein vorgegebenes Fax, eine Email, eine Sprachnachricht oder eine SMS-Nachricht versenden. Aufgrund dieser Nachricht kann das zuständige Bedienpersonal von der Störungsmeldung der Einrichtung und/oder der Störung der Datenübertragungsverbindung bzw. der Störung des Systemrechners in der Leitstelle informiert werden. Auch kann durch ein Fax, eine Email oder eine SMS-Nachricht ein vorbestimmter Benutzer von dem Problem informiert werden. Dies ist insbesondere für die Betreiber von kleineren Anlagen, die keine dauernd mit Personal besetzte Leitstelle aufweisen, interessant. Das Bedienpersonal kann so kostengünstig und einfach, beispielsweise zuhause, alarmiert werden.

Die Verbindung zwischen dem Protokollkonverter und dem Systemrechner kann erfindungsgemäß über eine analoge und/oder digitale Telefonverbindung erfolgen. Die Verbindung kann beispielsweise ein analoges Modem, ein GSM-Modem oder ein ISDN-Modem aufweisen. Die Datenübertragungsverbindung kann über ein privates und/oder ein öffentliches Netz kostengünstig erfolgen. Die Verbindung zwischen dem Protokollkonverter und dem Systemrechner kann dauerhaft bestehen oder nach Bedarf auf- und wieder abgebaut werden. Der Auf- und Abbau der Verbindung kann sowohl vom Protokollkonverter, als auch vom Systemrechner aus erfolgen. Dabei kann sowohl eine direkte Modemverbindung zwischen dem Modem des Protokollkonverters und dem Modem des Systemrechners als auch eine Verbindung zwischen Protokollkonverter und Systemrechner über das Internet vorgesehen sein. Bei einer Internet-Verbindung wählt beispielsweise das Modem des Protokollkonverters eine lokale Einwahlnummer eines Internetproviders an und stellt eine temporäre Internet-Verbindung zum Systemrechner her. Auf diese Weise können beliebig angeordnete Anlagen (Protokollkonverter und Einrichtungen) kostengünstig mit dem Systemrechner kommunizieren und von diesem überwacht und gesteuert werden. Die Verbindungskosten bei einem Betrieb von über den Globus verteilten Anlagen können so verringert werden.

Weiterhin können im Falle einer temporären Verbindung zwischen Systemrechner und Protokollkonverter durch die erfindungsgemäße Speicherung der abgefragten Daten der Einrichtungen die Übertragungskosten deutlich reduziert werden. Beispielsweise fragt der Protokollkonverter die Einrichtungen in vorgegebenen zeitlichen Abständen ab und ermittelt die vorbestimmten Daten zur Übertragung an den Systemrechner. Nachdem alle vorbestimmten Daten ermittelt wurden, kann der Protokollkonverter eine Verbindung zu dem Systemrechner aufbauen, die Daten gemeinsam übertragen und die Verbindung zu dem Systemrechner beenden. Auf der anderen Seite kann auch der Systemrechner eine Verbindung zu dem Protokollkonverter aufbauen, die benötigten Daten von diesem abfragen und die Verbindung beenden.

Der Verbindungsaufbau von Systemrechner zum Protokollkonverter kann auch mit einem Rückrufverfahren (Call-back-Verfahren) erfolgen. Der Systemrechner sendet ein kurzes Signal oder eine Rückrufaufforderung an den Protokollkonverter, wenn er an diesen Daten übertragen oder von diesem abfragen will. Der Protokollkonverter ruft daraufhin eine vorgegebene Rückrufnummer zurück, um eine Datenübertragungsverbindung zum Systemrechner aufzubauen. Da die eigentliche Datenübertragungsverbindung immer vom Protokollkonverter aus zu dem Systemrechner aufgebaut wird, kann ein fremdes System keine Daten zu dem Protokollkonverter übertragen oder von diesem abfragen. Unbefugter Zugriff auf den Protokollkonverter wird verhindert und die Sicherheit der Vorrichtung zur Datenkommunikation wird erhöht.

In einer Ausführungsform können der Protokollkonverter und der Systemrechner beispielsweise eine oder mehrere RS-232-Schnittstellen aufweisen. Auf diese Weise können einfach analoge oder ISDN-Modems zum Aufbau der Datenübertragungsverbindung zwischen dem Protokollkonverter und dem Systemrechner verwendet werden. Protokollkonverter und Systemrechner können auch durch ein Null-Modemkabel oder über eine optische Schnittstelle, insbesondere eine Optolink-Schnittstelle, miteinander direkt verbunden werden. Dies ist insbesondere für eine vor-Ort-Diagnose und Wartung durch den Kundendienst von Vorteil. Der Systemrechner kann beispielsweise ein geeigneter tragbarer Computer sein, der in der Nähe der Heizungsanlage an einen Protokollkonverter angeschlossen wird. Durch die erfindungsgemäße Vorrichtung kann sowohl in der Leitstelle, als auch auf dem tragbaren Computer vor Ort die gleiche Software zur Parametrierung und Überwachung von Heizungsanlagen verwendet werden.

Eine weitere Möglichkeit für die Datenübertragungsverbindung zwischen Systemrechner und Protokollkonverter besteht in dem direkten Anschluß beider Geräte an ein Datennetzwerk LAN. Beispielsweise kann der Protokollkonverter über einen LAN-Koppler an ein Ethernet angeschlossen werden. Der Systemrechner kann über einen üblichen Ethernet-Netzanschluß mit dem Datenübertragungsnetzwerk verbunden werden. Dies ermöglicht eine einfache und kostengünstige Verbindung über ein eventuell bereits bestehendes Datenübertragungsnetzwerk.

Der Systemrechner kann in vorgegebenen zeitlichen Abständen eine Verbindung zu dem Protokollkonverter aufbauen und vorbestimmte Daten abfragen. Die vorbestimmten Daten wurden zuvor vom Protokollkonverter von den Einrichtungen abgefragt und zwischengespeichert. Der Systemrechner kann auf diese Weise durch eine einzige Abfrage eine größere Menge von Daten aller über das Bussystem mit dem Protokollkonverter verbundenen Einrichtungen erfassen. Ein Verbindungsaufbau zu jeder einzelnen Einrichtung ist nicht nötig. Auf diese Weise können die Datenübertragungskosten verringert und der Aufbau des Systemrechners vereinfacht werden. Der Verbindungsaufbau kann auch über das Rückrufverfahren erfolgen, bei dem der Protokollkonverter nach Erhalt einer Rückrufnachricht eine vorgegebene Rückrufnummer anwählt und die Verbindung zum Systemrechner aufbaut.

Der Systemrechner kann eine Verbindung zu dem Protokollkonverter aufbauen und Daten für eine bestimmte Einrichtung an den Protokollkonverter senden. Die Verbindung kann anschließend sofort wieder abgebaut werden. Der Protokollkonverter wertet die empfangenen Daten aus und leitet Kommandos an die entsprechenden Einrichtungen weiter. Der Systemrechner kann auch eine Verbindung zu dem Protokollkonverter aufbauen und Daten von einer bestimmten Einrichtung von dem Protokollkonverter abfragen/empfangen. Der Protokollkonverter kann, falls die angefragten Daten nicht bereits in dem Speicher vorliegen, die entsprechende Einrichtung über das Bussystem kontaktieren, die angefragten Daten ermitteln und an den Systemrechner übertragen. Der Protokollkonverter ermöglicht eine logische Verbindung zwischen den Einrichtungen dss Bussystems und dem Systemrechner. Die Datenkommunikation zwischen den Einrichtungen und dem Systemrechner findet über den Protokollkonverter statt. Der Protokollkonverter kann den Zugriff auf die Daten der Einrichtungen regeln, Daten und Kommandos verteilen oder bündeln/kombinieren und den Verbindungsaufbau zum Systemrechner steuern.

Der Systemrechner kann auch Verbindungen zu mehreren Protokollkonvertern aufbauen und Daten zu mehreren Einrichtungen übertragen bzw. von diesen empfangen. Er kann Daten für bestimmte Einrichtungen an die jeweiligen Protokollkonverter senden und/oder Daten von bestimmten Einrichtungen von den jeweiligen Protokollkonvertern empfangen. Der Systemrechner sendet dazu beispielsweise Daten für eine bestimmte Einrichtung an den Protokollkonverter, der an das gleiche Bussystem wie die bestimmte Einrichtung angeschlossen ist.

Der Systemrechner kann eine Datenbank aufweisen, die die Konfigurations-, Inbetriebnahme-, Wartungs- und Betriebsdaten von Einrichtungen und/oder Protokollkonvertern enthält. Insbesondere können Störungs- und Wartungsmeldungen in der Datenbank gespeichert werden. Die Datenbank kann beispielsweise Bedien-, Konfigurations- und Betriebsdaten der einzelnen Einrichtungen enthalten. Weiterhin können Verfahrens- und Meßdaten, beispielsweise von Wärmezählern oder Temperaturfühlern, aufgezeichnet werden. Vorteilhafterweise kann die Datenbank auch Systemdaten der Protokollkonverter, wie beispielsweise der Typ des angeschlossenen Bussystems, eine Liste der angeschlossenen Einrichtungen und/oder Informationen über verwendete Modemtypen und ihre Ansteuerungskonfigurationen, enthalten. Auf die aktuellen Konfigurations-, Wartungs- und Betriebsdaten sowie auf die letzten Störungs- und Wartungsmeldungen von zu überwachenden Einrichtungen kann im Systemrechner zugegriffen werden, ohne daß eine Verbindung zu dem entsprechenden Protokollkonverter und/oder der entsprechenden Einrichtung aufgebaut werden muß. Die Datenbank kann beispielsweise den aktuellen Zustand der zu überwachenden Heizungsanlagen enthalten. Das Bedienpersonal kann den aktuellen Zustand überprüfen und gegebenenfalls Maßnahmen zur Behebung von Störungen einleiten. Weiterhin kann die Datenbank Referenzdaten und/oder Inbetriebnahmeoder Serviceprotokolle für die überwachten Betriebsmittel (Einrichtungen) enthalten.

Der Systemrechner kann eine vorbestimmte Nachricht versenden, wenn von einer der Einrichtungen eine bestimmte Störungs- oder Wartungsmeldung vorliegt. Insbesondere kann der Systemrechner ein Fax, eine Sprachnachricht, eine Email oder eine SMS-Nachricht an einen anderen Systemrechner, beispielsweise in einer anderen Leitstelle, und/oder an eine oder mehrere vorbestimmte Bedienpersonen versenden, um diese über den Eingang einer Störungs- oder Wartungsmeldung zu informieren. Das Weiterleiten der Meldungen kann nach einem vorgegebenen Bearbeitungsplan, in dem die entsprechenden Dienste eingetragen sind, erfolgen. Der Bearbeitungsplan kann zeit- und anlagenspezifisch für jede Einrichtung oder für eine Gruppe von Einrichtungen einen Dienst- und/oder Serviceplan umfassen, der angibt welche Art von Meldung zu welcher Zeit für welche Einrichtung zu einer bestimmten Aktion führt, z.B. weiterleiten als SMS-Nachricht. Die durchzuführenden Aktionen können durch den Bearbeitungsplan einfach an die Dienstpläne des Bedienpersonals angepaßt werden. Weiterhin kann der Systemrechner vordefinierte Aufgaben nach einem definierbaren Zeitschema ausführen, um beispielsweise Anlagenwerte bestimmter Heizungsanlagen zu überwachen.

Ein Zugriff auf die Datenbank des Systemrechners kann über einen Internet-Server und/oder einen WAP-Server erfolgen. Auf die Daten des Systemrechners kann mittels eines WAP-fähigen Mobiltelefons oder eines herkömmlichen Internetbrowsers über das Internet von einem entsprechend ausgestatteten Personal-Computer zugegriffen werden. Beispielsweise können der Betriebs- und Wartungszustand der zu überwachenden Einrichtungen auf einem Webserver zur Abfrage über das Internet bereitgestellt werden. Dies ist insbesondere für das Betriebspersonal von kleineren Anlagen von Vorteil, das sich nicht ständig in der Leitstelle aufhält. Das zuständige Wartungspersonal kann beispielsweise über den Versand einer SMS-Nachricht auf eine bestimmte Störung aufinerksam gemacht werden. Die Behebung dieser Störung kann von dem Betriebspersonal von zuhause über das Internet und den Web-Server oder ein WAP-fähiges Mobiltelefon erfolgen. Eine nächtliche Anfahrt des Betriebspersonals zur Leitstelle kann so vermieden werden.

Vorteilhafterweise können in einer größeren Leitstelle oder in einem Betrieb mit mehreren Leitstellen auch mehrere Systemrechner jeweils Verbindungen zu den Protokollkonvertern aufbauen und/oder Daten von den Protokollkonvertern empfangen oder Daten an die Protokollkonverter versenden. Die Systemrechner können dabei über das Internet miteinander kommunizieren. Auf diese Weise kann einfach ein verteiltes System mit mehreren Systemrechnern realisiert werden. Die Systemrechner können beispielsweise in mehreren Leitstellen angeordnet sein. Auch kann ein Systemrechner in einer Leitstelle angeordnet sein und ein weiterer Systemrechner in Form eines tragbaren Computers für eine vor-Ort-Diagnose eingesetzt werden. Die Systemrechner können über das Internet verbindbar sein und Nachrichten austauschen.

Einer der Systemrechner kann eine zentrale Datenbank aufweisen. Die anderen Systemrechner können Datenänderungen an diese zentrale Datenbank melden und/oder ihre eigene Datenbank mit der zentralen Datenbank abgleichen. Dies ist insbesondere für ein großes System mit mehreren Systemrechnern in einer großen Leitstelle oder für mehrere Leitstellen von Vorteil und kann zur Datensicherung und/oder zur Wahrung der Datenkonsistenz bei Zugriffen von mehreren Benutzern/Systemen auf die gleichen Daten verwendet werden. Der Systemrechner, der die zentrale Datenbank aufweist, kann automatisch einen Abgleich der Datenbanken der einzelnen Systemrechner ansteuern.

Ein Verfahren zur Datenkommunikation, insbesondere zur Parametrisierung und Fernüberwachung von Heizungsanlagen, kann zumindest einen der folgenden Schritte aufweisen: Übertragung von Daten nach einem ersten Datenübertragungsprotokoll zwischen einem Systemrechner und einem Protokollkonverter; Konvertierung der Daten des ersten Datenübertragungsprotokolls in Daten des zweiten Datenübertragungsprotokolls und umgekehrt in den Protokollkonverter; und Übertragung von Daten nach dem zweiten Datenübertragungsprotokoll zwischen dem Protokollkonverter und mindestens einer Einrichtung.

Die erfindungsgemäße Vorrichtung und das erfindungsgemäße Verfahren zur Datenkommunikation zwischen einem Systemrechner und mindestens einer Einrichtung über einen Protokollkonverter ermöglicht einen einfachen und flexiblen Aufbau von komplexen Heizungs-, Klima- und Kühlanlagen. Die Parametrisierung und Fernüberwachung der Einrichtungen kann auf gleiche Weise von einem Systemrechner in der Leitstelle oder einem mobilen Systemrechner vor Ort durchgeführt werden. Der Protokollkonverter ermöglicht den Einsatz von verschiedensten Bussystemen zur Vernetzung der Einrichtungen und zum Betreiben einer Datenübertragungsverbindung zu dem Systemrechner über eine eventuell bereits vorhandene Kommunikationsinfrastruktur. Durch die Zwischenspeicherung der Daten in dem Protokollkonverter können im Fall einer Telefonwählverbindung zu dem Systemrechner die Verbindungskosten niedrig gehalten werden. Die Datenbank des Systemrechners ermöglicht dem Bedienpersonal einen unmittelbaren Zugriff auf aktuelle Betriebs- und Konfigurationsdaten der zu verwaltenden Einrichtungen.

Die folgende Beschreibung von Ausführungsbeispielen wird anhand von beigefügten schematischen Figuren vorgenommen. Es zeigen:
Fig. 1 eine schematische Darstellung einer erfindungsgemäßen Vorrichtung zur Datenkommunikation, insbesondere zur Parametrisierung und Fernüberwachung von Heizungsanlagen;
Fig. 2 ein mögliches Ablaufdiagramm der Verarbeitung in einem Protokollkonverter;

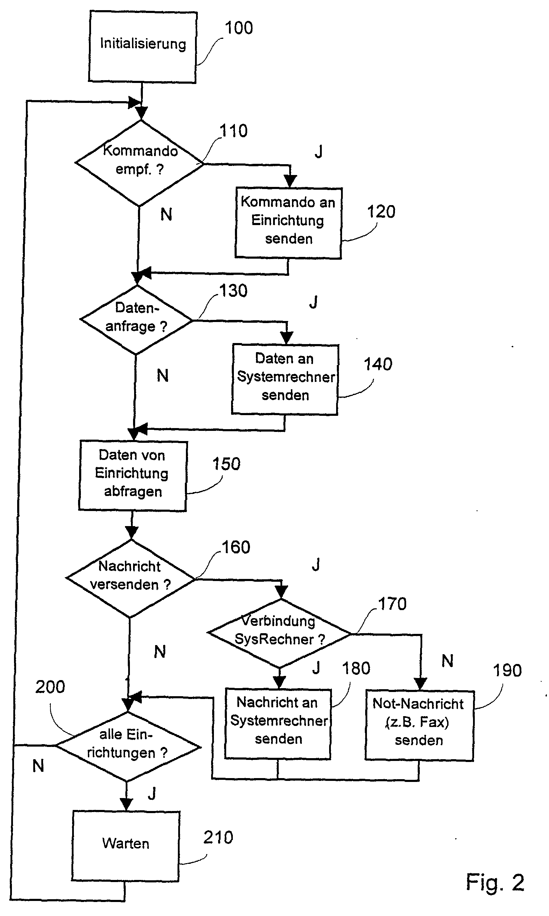

Fig. 2 ein mögliches Ablaufdiagramm der Verarbeitung in einem Systemrechner;

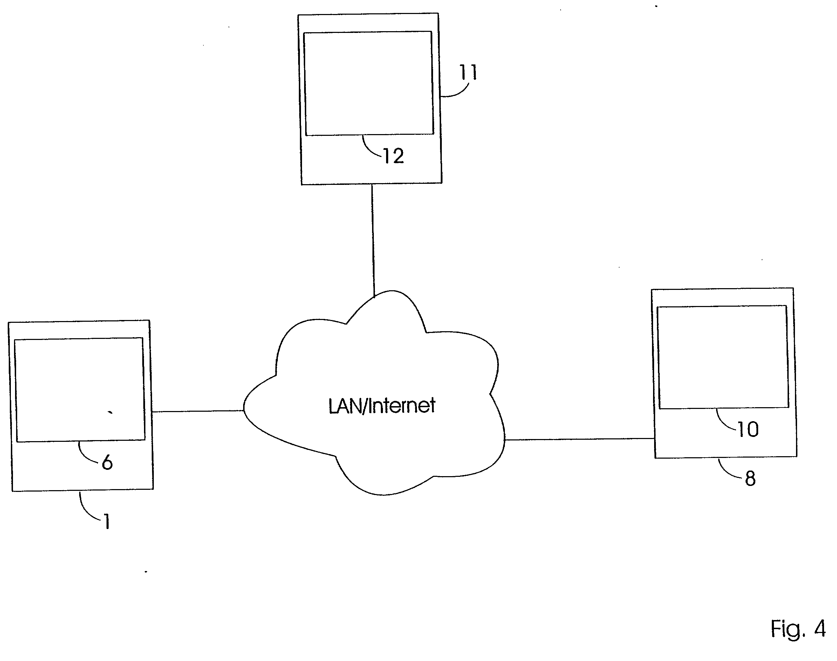

Fig. 4 eine schematische Darstellung von zwei Systemrechnern, die direkt an ein LAN angeschlossen sind; und

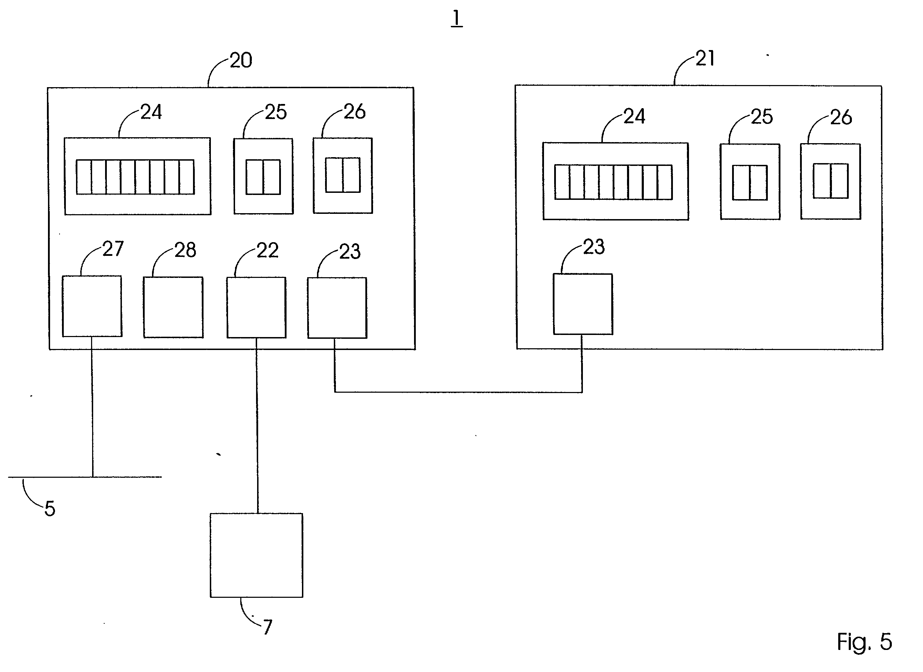

Fig. 5 eine schematische Darstellung für ein Ausführungsbeispiel eines Protokollkonverters.

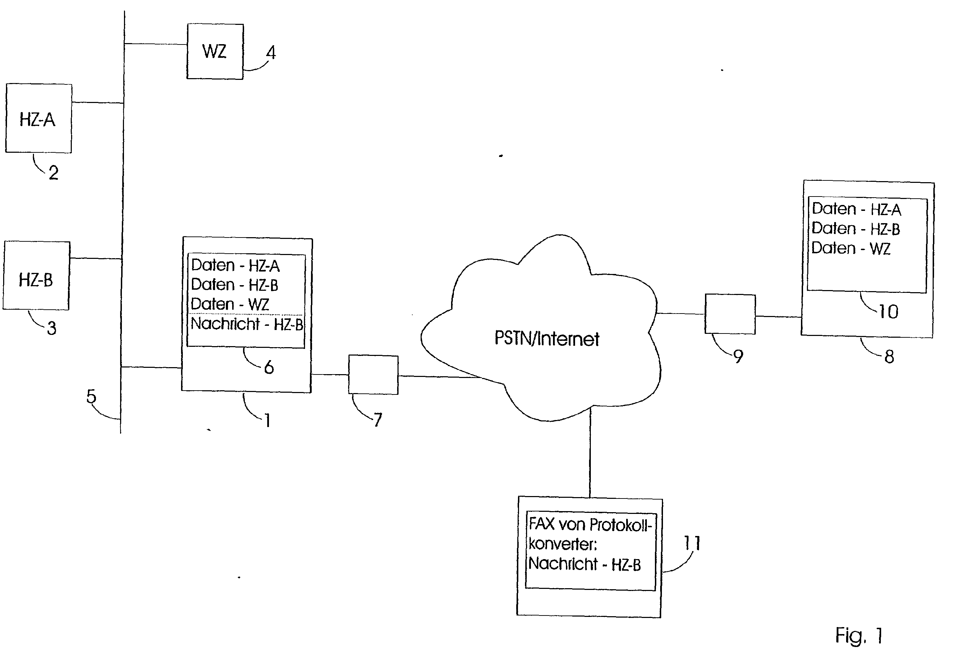

Die Fig. 1 zeigt eine schematische Darstellung einer erfindungsgemäßen Vorrichtung zur Datenkommunikation, insbesondere zur Parametrierung und Fernüberwachung von Heizungsanlagen. Bei den zu überwachenden Einrichtungen handelt es sich in diesem Ausführungsbeispiel um eine erste Heizungsanlage HZ-A 2, eine zweite Heizungsanlage HZ-B 3 und einen Wärmezähler WZ 4. Die Einrichtungen 2, 3, 4 sind an das Bussystem 5 angeschlossen. Bei dem Bussystem 5 handelt es sich beispielsweise um einen LON-Hausbus, der in einem Gebäude zur Steuerung der Gebäudetechnik verlegt ist.

Der Protokollkonverter 1 ist sowohl mit dem Bussystem 5, als auch mit einem Modem 7 verbunden. Dazu kann der Protokollkonverter beispielsweise eine LON-Busschnittstelle, eine optische Schnittstelle (Optolink-Interface) und eine RS-232-Schnittstelle aufweisen. Bei dem Modem 7 kann es sich um ein analoges Telefonmodem oder um ein ISDN-Modem handeln. Das Modem 7 ist über eine Standardtelefonverkabelung mit einem privaten oder öffentlichen Fernsprechnetz verbunden. Anstelle einer drahtgebundenen Verbindung kann auch eine drahtlose Verbindung über ein GSM-Modem vorgesehen sein. Die Steuerung des Modems 7 erfolgt von dem Protokollkonverter 1. Der Protokollkonverter 1 weist weiterhin einen Speicher 6 zur Speicherung von abgefragten Daten der angeschlossenen Einrichtungen 2, 3, 4 und zum Speichern von empfangenen Nachrichten von den Einrichtungen 2, 3, 4 auf.

Ein Protokollkonverter 1 kann auch zusätzliche analoge oder digitale Ein- und Ausgänge zum direkten Anschluß von Einrichtungen ohne Busschnittstelle aufweisen. Durch die Eingänge können beispielsweise die Zustände angeschlossener Geräte oder Meßwerte erfaßt werden. Die Ausgänge, z.B. Relais-Ausgänge, können zur Steuerung von angeschlossenen Geräte verwendet werden. Dies ermöglicht den Betrieb von relativ einfachen Geräten wie Temperatursensoren, die keine eigene Busschnittstelle aufweisen. Durch die Ein- und Ausgänge des Protokollkonverters 1 können diese Geräte von der erfindungsgemäßen Vorrichtung zur Datenkommunikation überwacht und gesteuert werden. Der Protokollkonverter 1 übernimmt die Funktion einer virtuellen Einrichtung, die wie die anderen Einrichtungen vom Systemrechner 8 überwacht, parametrisiert und eingestellt wird und die die Steuerung der direkt angeschlossenen Geräte durchführt.

Der Protokollkonverter 1 fragt in vorgegebenen zeitlichen Abständen vorbestimmte Daten von den über das Bussystem 5 angeschlossenen Einrichtungen 2, 3, 4 ab und speichert diese in dem dafür vorgesehenen Speicher 6. In dem in Fig. 1 gezeigten Beispiel wurden Daten von der ersten Heizungsanlage HZ-A 2, der zweiten Heizungsanlage HZ-B 3 und dem Wärmezähler WZ 4 abgefragt und gespeichert. Die zyklische Datenabfrage kann beispielsweise alle 10 Minuten erfolgen. Die abgefragten Daten können beispielsweise die Betriebs- und Konfigurationszustände der abgefragten Einrichtungen enthalten. In dem in Fig. 1 gezeigten Beispiel wurden diese Daten beispielsweise um 7.55 Uhr von den Einrichtungen 2, 3, 4 abgefragt. Die gespeicherten Daten werden von dem Protokollkonverter 1 im Speicher 6 zur Abfrage vom Systemrechner 8 bereitgehalten.

Der Systemrechner 8 baut beispielsweise jede Stunde eine Verbindung zu dem Protokollkonverter 1 auf und veranlaßt die Übertragung der vom Protokollkonverter 1 gespeicherten Daten. In dem gezeigten Ausführungsbeispiel ist dazu ein analoges oder ein ISDN-Modem 9 mit dem Systemrechner 8 und dem Fernsprechnetz verbunden. Ein Systemrechner 8 kann auch über mehrere Modems 9 verfügen, um gleichzeitig mehrere Verbindungen zu Protokollkonvertern zu unterhalten. Der Systemrechner 8 veranlaßt beispielsweise das Modem 9 eine Wählverbindung zu dem Modem 7 und dem Protokollkonverter 1 aufzubauen. Dies kann in vorgegebenen zeitlichen Abständen oder nach Bedarf geschehen.

Weiterhin kann das Rückrufverfahren zu dem Aufbau einer sicheren Verbindung zwischen Protokollkonverter 1 und Systemrechner 8 verwendet werden. Die Verbindung kann sowohl als eine direkte Modemverbindung zwischen den Modems 7, 9 (z.B. über den V.34 oder V.90 Standard) als auch über eine Internetverbindung erfolgen. Dazu wählt beispielsweise das Modem 7 eine lokale Einwahlnummer eines Internetproviders und stellt eine Verbindung zu dem Systemrechner 8 her, der über das Modem 9 oder einen LAN-Anschluß mit dem Internet verbunden ist.

Nach Verbindungsaufbau werden die im Protokollkonverter 1 gespeicherten Daten an den Systemrechner 8 übertragen und dort in einer Datenbank 10 abgelegt. Nach Beendigung der Datenübertragung kann die Verbindung zur Reduktion der Verbindungskosten abgebaut werden.

In dem in Fig. 1 gezeigten Beispiel erfolgt der Verbindungsaufbau vom Systemrechner 8 zu dem Protokollkonverter 1 beispielsweise in stündlichen Abständen. Die in der Datenbank 10 abgelegten Daten wurden beispielsweise um 8.00 Uhr vom Protokollkonverter 1 zum Systemrechner 8 übertragen. Der Protokollkonverter 1 hat diese Daten beispielsweise um 7.55 Uhr von den Einrichtungen 2, 3, 4 abgefragt. Eine nächste regelmäßige Datenübertragung zwischen Protokollkonverter 1 und Systemrechner 8 würde in dem gezeigten Beispiel um 9.00 Uhr stattfinden.

Um 8.05 Uhr geht beispielsweise eine Nachricht mit einer Störungsmeldung der zweiten Heizungsanlage HZ-B 3 in dem Protokollkonverter 1 ein. Bei Eingang einer Störungsmeldung soll erfindungsgemäß vom Protokollkonverter 1 sofort eine Nachricht an den Systemrechner 8 übermittelt werden und nicht auf die nächste Abfrage der Daten durch den Systemrechner 8 gewartet werden. In dem gezeigten Beispiel würde die nächste vom Systemrechner 8 initiierte Datenübertragung um 9 Uhr stattfinden. Der Protokollkonverter 1 steuert das Modem 7 an um eine Verbindung zu dem Systemrechner 8 aufzubauen und die empfangene Nachricht weiterzuleiten. Kann diese Verbindung zwischen Protokollkonverter 1 und Systemrechner 8 nicht aufgebaut werden, so kann der Protokollkonverter 1 beispielsweise nach Verstreichen einer vorbestimmten Zeit weitere Versuche zum Verbindungsaufbau auch zu anderen Systemrechnern unternehmen, um die empfangene Nachricht an einen Systemrechner weiterzuleiten. Der Systemrechner 8 kann die empfangene Nachricht gemäß dem Bearbeitungsplan, beispielsweise in Form eines Fax, einer Email oder einer SMS-Nachricht, an das Bedienpersonal weiterleiten, wenn die Leitstelle zum Zeitpunkt des Empfangs der Nachricht nicht besetzt ist. Kommt diese Verbindung auch bei den weiteren Versuchen nicht zustande, versendet der Protokollkonverter 1 eine vorgegebene Nachricht.

In dem in Fig. 1 gezeigten Beispiel wird eine Fax-Nachricht mit einem entsprechenden Inhalt an das Fax-Gerät 11 gesendet. Das Fax-Gerät 11 kann sich beispielsweise in einer Leitstelle oder zuhause bei einer zuständigen Betriebsperson befinden. Die zuständige Person kann auf diese Weise unmittelbar von der eingegangenen Störung in einer der Einrichtungen benachrichtigt werden, obwohl zu diesem Zeitpunkt keine Verbindung zwischen Protokollkonverter 1 und Systemrechner 8 möglich ist.

Selbstverständlich können Protokollkonverter 1 und Systemrechner 8 auf viele andere Arten miteinander verbunden werden und Daten austauschen. Beispielsweise können beide direkt an ein Computernetzwerk (LAN) angeschlossen werden oder sie können direkt über ein Null-Modem miteinander verbunden werden. Es sind auch weitere Ausführungsformen denkbar, bei denen das Internet oder andere Datenübertragungsmedien genutzt werden können.

Die Betriebs- und Konfigurationsdaten der Einrichtungen 2, 3, 4 können vom Betriebspersonal in der Leitstelle direkt durch Zugriff auf die Datenbank 10 des Systemrechners 8 geprüft und kontrolliert werden, ohne daß dazu eine dauerhafte Verbindung zu den zu wartenden und überwachenden Einrichtungen 2, 3, 4 bestehen muß. Selbstverständlich sind die in diesem Beispiel angegebenen vorgegebenen zeitlichen Abstände nur ein mögliches Beispiel für eine Konfiguration der erfindungsgemäßen Vorrichtung und können den Anforderungen entsprechend angepaßt werden.

Die Fig. 2 zeigt einen möglichen Ablaufplan für die Verarbeitung in einem Protokollkonverter. In einem Schritt 100 wird die gespeicherte Systemkonfiguration des Protokollkonverters ausgewertet und der Protokollkonverter wird initialisiert. Dabei kann beispielsweise ein angeschlossenes Modem konfiguriert und das Hausbussystem geprüft werden.

In dem Schritt 110 wird geprüft, ob Kommandos des Systemrechners 8 für den Protokollkonverter 1 angeschlossene Einrichtungen 2, 3, 4 empfangen wurden. Im Falle eines Empfangs derartiger Kommandos werden diese in einem Schritt 120 bearbeitet und an die entsprechende Einrichtungen über das Bussystem 5 weitergeleitet. Es sind selbstverständlich auch solche Kommandos möglich, die an alle angeschlossenen Einrichtungen über das Bussystem 5 weiterzuleiten sind ( Broadcast). Weiterhin kann der Systemrechner 8 natürlich auch Kommandos an den Protokollkonverter 1 selbst senden. Diese sind vom Protokollkonverter 1 auszuwerten. Bei-. spielsweise kann auf diese Art die zu wählende Telefonnummer für eine Notverbindung verändert werden.

In Schritt 130 prüft der Protokollkonverter 1, ob eine Datenanfrage vom Systemrechner 8 vorliegt. Liegt eine Anfrage für Daten von angeschlossenen Einrichtungen vor, werden in Schritt 140 die angefragten Daten an den Systemrechner 8 übersandt. Sind keine Daten an den Systemrechner 8 zu senden, so wird direkt zu Schritt 150 verzweigt.

In Schritt 150 werden die in den Konfigurationsdaten festgelegten vorbestimmten Daten von einer Einrichtung 2, 3, 4 abgefragt. Dazu wird ein entsprechendes Kommando nach dem zweiten Datenübertragungsprotokoll an die Einrichtung 2, 3, 4 über das Bussystem 5 gesendet. Die angesprochene Einrichtung meldet sich mit den angefragten Daten über das Bussystem 5 zurück. Die auf diese Weise empfangenen Daten werden in dem Speicher 6 des Protokollkonverters 1 abgelegt.

In Schritt 160 wird geprüft, ob aufgrund der empfangenen Daten oder aufgrund von eingegangenen Nachrichten von den zu überwachenden Einrichtungen 2, 3, 4 eine Notfallmeldung an den Systemrechner 8 abzusenden ist.

Falls eine solche Nachricht an den Systemrechner 8 abzusenden ist, wird in Schritt 170 versucht, eine Verbindung zu dem Systemrechner 8 aufzubauen. Gegebenenfalls ist der Versuch eine Verbindung aufzubauen nach einer vorgegebenen Zeit mehrfach (z.B. 10mal) zu wiederholen. Es kann auch versucht werden eine Verbindung zu einem anderen Systemrechner 8 aufzubauen.

Kann eine Verbindung zu dem Systemrechner 8 hergestellt werden, so sendet der Protokollkonverter 1 in Schritt 180 gemäß dem ersten Datenübertragungsprotokoll eine Nachricht, z.B. eine Notmeldung entsprechenden Inhalts, an den Systemrechner 8. Diese Notmeldung kann die empfangene Nachricht von der gestörten Einrichtung und/oder den Grund aufgrund denen die Notmeldung abgesendet wurde, enthalten.

Die Datenübertragung zu dem Systemrechner 8 kann nach einem Quittungsverfahren durchgeführt werden, bei dem die jeweilige empfangende Seite den Erhalt einer Nachricht quittiert.

Falls keine Verbindung zum Systemrechner 8 aufgebaut werden kann, wird von Schritt 170 zu Schritt 190 verzweigt. In Schritt 190 wird vom Protokollkonverter 1 eine vorbestimmte Notverbindung aktiviert und eine vorgegebene Nachricht, beispielsweise ein Fax, versandt. Dieses Fax kann den Grund für die Notmeldung und eine Beschreibung der vorliegende Störung der Verbindung zum Systemrechner 8 enthalten.

In Schritt 200 wird geprüft, ob die bestimmten Daten von allen abzufragenden Einrichtungen 2, 3, 4 bereits vorliegen. Falls noch Daten von Einrichtungen 2, 3, 4 in diesem Durchlauf eines Zyklus abzufragen sind, wird zurück zu Schritt 110 verzweigt und mit der nächsten Einrichtung fortgefahren. Sind bereits alle an das Bussystem 5 angeschlossenen Einrichtungen 2, 3, 4 abgefragt, so wird mit Schritt 210 fortgefahren.

In Schritt 210 wird eine vorgegebene Zeit abgewartet bevor ein neuer Abfragezyklus gestartet wird. Nach beispielsweise 10 Minuten wird der Ablauf mit Schritt 110 und der Abfrage der ersten abzufragenden Einrichtung fortgesetzt. Die Reihenfolge der abzufragenden Einrichtungen 2, 3, 4 kann in der Konfiguration des Protokollkonverters 1 beliebig festgelegt werden.

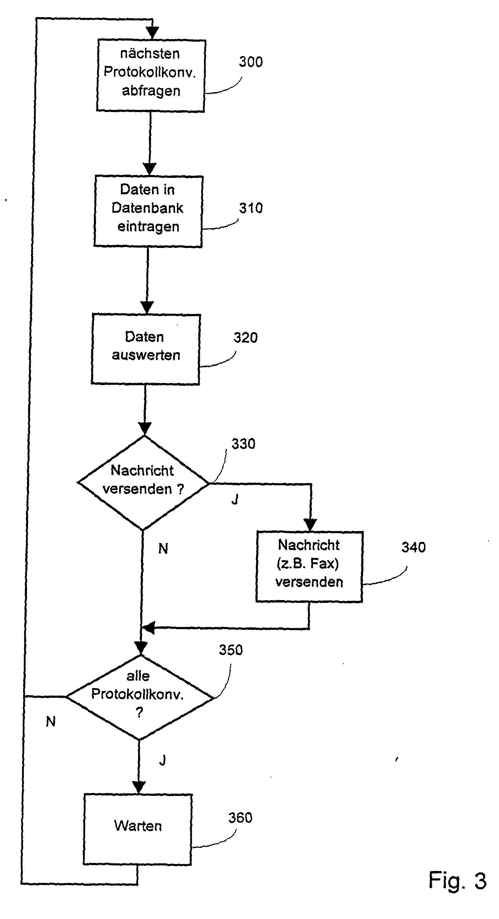

Die Fig. 3 zeigt einen möglichen Ablauf der Verarbeitung in dem Systemrechner 8 in einer Ausführungsform mit mehreren Protokollkonvertern. In Schritt 300 werden die Daten der zu überwachenden Einrichtungen 2, 3, 4 von dem ersten Protokollkonverter 1 abgefragt. Dazu wird von dem Systemrechner 8 eine Verbindung zu dem Protokollkonverter 1 aufgebaut, d.h. beispielsweise wird das Modem 9 so angesteuert, daß eine Wählverbindung über ein privates oder öffentliches Fernsprechnetz zu dem Modem 7 und dem Protokollkonverter 1 entsteht. Der Verbindungsaufbau kann auch mit einem Rückrufverfahren (Call-back-Verfahren) erfolgen, bei dem die Verbindung nach Erhalt einer Rückrufaufforderung immer von dem Protokollkonverter 1 aufgebaut wird. Der Systemrechner 8 sendet entsprechende Kommandos an den Protokollkonverter 1, der wiederum die angeforderten Daten an den Systemrechner 8 sendet. Im Anschluß an den Datenaustausch wird im Falle einer Wählverbindung diese abgebaut.

Für den Fall, daß sowohl Systemrechner 8 als auch Protokollkonverter 1 an ein Datenübertragungsnetzwerk mit festen Verbindungen, beispielsweise ein LAN, angeschlossen sind, erfolgt kein Aufbau einer temporären Wählverbindung. Es wird lediglich eine logische Verbindung zwischen Systemrechner 8 und Protokollkonverter 1 zur Datenübertragung aufgebaut. Dies kann beispielsweise durch die Verwendung von Sockets für das TCP geschehen. Natürlich können auch verbindungslose Übertragungsprotokolle, wie beispielsweise UDP, eingesetzt werden.

Die empfangenen Daten werden in Schritt 310 in die Datenbank 10 des Systemrechners 8 eingetragen. Aufgrund der in der Datenbank 10 vorhandenen Daten kann eine Bedienperson jederzeit den Zustand der zu überwachenden Einrichtungen 2, 3, 4 überprüfen, ohne daß erst Verbindungen zu den einzelnen Einrichtungen 2, 3, 4 aufgebaut und die Daten abgefragt werden müssen.

In Schritt 320 werden die empfangenen Daten ausgewertet. Beispielsweise kann ein außergewöhnlicher Betriebszustand einer Einrichtung 2, 3, 4 festgestellt werden. Weiterhin können empfangene Meßwerte, beispielsweise von Wärmezählern oder Temperaturfühlern, analysiert werden. In Schritt 330 wird festgestellt, ob anhand der ausgewerteten Daten eine Nachricht an eine Bedienperson zu versenden ist.

Gegebenenfalls wird in Schritt 340 eine solche Nachricht versandt. Mit Hilfe dieser Nachricht kann eine zuständige Bedienperson von einem außergewöhnlichen Zustand, beispielsweise dem Vorliegen einer Störung in einer Einrichtung, in Kenntnis gesetzt werden. Die Nachricht kann beispielsweise in Form einer SMS-Nachricht an das Mobiltelefon der Bedienperson übersandt werden. Die Bedienperson kann so auf einfache Weise zu jeder Zeit und an jedem Ort alarmiert werden.

In Schritt 350 wird geprüft, ob bereits alle Protokollkonverter des Systems abgefragt wurden. Falls noch weitere Protokollkonverter abzufragen sind, wird zurück zu Schritt 300 verzweigt und dort mit der Abfrage des nächsten Protokollkonverters fortgefahren. Die Reihenfolge der Abfrage der Protokollkonverter kann beliebig festgelegt werden und kann im Systemrechner 8 gespeichert werden.

Im Anschluß an die Abfrage aller Protokollkonverter wird in Schritt 360 eine vorbestimmte Zeit gewartet, bevor ein neuer Durchgang für einen neuen Zyklus gestartet wird. Die vorgegebene Wartezeit kann den entsprechenden Systemanforderungen entsprechend flexibel eingestellt werden.

Während der oben gezeigten Bearbeitungsschritte kann jederzeit eine Nachricht von einem Protokollkonverter 1 eintreffen. Die Verarbeitung dieser Nachrichten wird hier nicht gezeigt und kann beispielsweise durch eine Interrupt-Routine erfolgen. Weiterhin wird hier nicht auf vom Benutzer initiierte spezielle Verarbeitungsschritte eingegangen. Der Benutzer kann beispielsweise jederzeit eine Aktualisierung der vorliegenden Daten anfordern. In diesem Fall wird vom Systemrechner 8 eine außerplanmäßige Abfrage der angefragten Daten von dem Protokollkonverter 1 gestartet. Weiterhin kann der Benutzer jederzeit Kommandos für bestimmte Einrichtungen an der Bedienkonsole des Systemrechners 8 eingeben. Diese Kommandos werden anschließend vom Systemrechner 8 an den entsprechenden Protokollkonverter 1 übertragen und dort an die gewünschte Einrichtung 2, 3, 4 weitergeleitet.

Die Fig. 4 zeigt schematisch eine Darstellung einer Ausführungsform mit zwei Systemrechnern 8, 11, die direkt an ein LAN angeschlossen sind. Beide Systemrechner 8, 11 weisen jeweils eine Datenbank 10, 12 zur Speicherung von Konfigurations-, Wartungs- und Betriebsdaten von an den Protokollkonverter 1 angeschlossenen Einrichtungen (nicht gezeigt) auf. In diesem Beispiel weist der Systemrechner 8, der sich beispielsweise in der Leitstelle befindet, eine zentrale Datenbank 10 auf. Bei dem Systemrechner 11 handelt es sich um einen tragbaren Systemrechner in Form eines Notebooks mit dem beispielsweise ein Kundendienst- oder Wartungstechniker vor Ort eine Diagnose und Wartung von Heizungsanlagen vornehmen kann. Der Wartungstechniker kann die Heizungsanlage mit Hilfe des mobilen Systemrechners 11 konfigurieren und warten. Nach Abschluß der Wartungsarbeiten werden die aktuellen Konfigurationsdaten von der Datenbank 12 an die zentrale Datenbank 10 übermittelt. Auf diese Weise kann die Konsistenz der Datenbanken 10, 12 sichergestellt werden. Die Verbindung und Kommunikation zwischen den beiden Systemrechnern 8, 11 kann auf einfache Weise über das LAN oder das Internet z.B. durch das Internet Protocol IP erfolgen.

In einer weiteren Ausführungsform kann sich beispielsweise der Systemrechner 8 in der Leitstelle des Anlagenbetreibers befinden, während der zweite Systemrechner 11 beispielsweise in der Leitstelle eines Anlagenherstellers angeordnet ist. Auf diese Weise läßt sich einfach ein mehrstufiges System zur Parametrisierung und Fernüberwachung von Heizungsanlagen schaffen. Der Anlagenbetreiber führt beispielsweise einfache Wartungsaufgaben selbst aus und überläßt kompliziertere Wartungsund Diagnoseaufgaben dem Servicepersonal des Anlagenherstellers. Weiterhin kann die Leitstelle des Anlagenbetreibers nur teilweise besetzt sein. Während der Nacht und am Wochenende wird die Fernüberwachung von einer anderen Leitstelle durchgeführt. Diese kann beispielsweise ein Servicecenter des Anlagenherstellers sein, der zentral die Wartung und Fernüberwachung von Anlagen vieler seiner Kunden durchführt. Durch die Verwendung des Internets zur Kommunikation zwischen den einzelnen Systemrechnern 8, 11 kann eine solche verteilte Parametrisierung und Fernüberwachung von Einrichtungen 2, 3, 4 auf kostengünstige Weise ermöglicht werden.

Zur Gewährleistung der Sicherheit beim Zugriff auf Systemrechner 8, 11 und Protokollkonverter 1 können entsprechende Zugangskontrollen beispielsweise durch Kennwörter vorgesehen sein. Nur registrierte und berechtigte Anwender und Systeme können einen Zugriff auf Systemrechner 8, 11 und Protokollkonverter 1 erlangen. Beispielsweise kann ein Betreiber einer Anlage dem zentralen Kundendienst des Anlagenherstellers Zugriffsrechte auf seine Protokollkonverter 1 und Systemrechner 8, 11 einräumen. Weiterhin kann der Datenverkehr zwischen den einzelnen Komponenten der Vorrichtung verschlüsselt werden.

Die Fig. 5 zeigt eine schematische Darstellung für ein mögliches Ausführungsbeispiel eines erfindungsgemäßen Protokollkonverters.

Der gezeigte Protokollkonverter 1 kann vorteilhafterweise aus einem Grundmodul 20 und einem Erweiterungsmodul 21 aufgebaut sein. Das Grundmodul 20 weist eine Modemschnittstelle 22 nach der RS 232-Spezifikation mit V.24-Pegeln und mit LED-Anzeigen für Anwahl und Verbindung auf. Die Modemschnittstelle 22 wird mit einem seriellen Verbindungskabel mit dem protokollkonverterseitigen Modem 7 verbunden.

Das Grundmodul 20 sowie das Erweiterungsmodul 21 weisen jeweils eine Schnittstelle 23 auf, beispielsweise ein I2C-Bus-Interface. Grundmodul 20 und Erweiterungsmodul 21 können einfach durch den I²C-Bus miteinander verbunden werden. Auf diese Weise läßt sich ein flexibler Aufbau eines Protokollkonverters 1 erreichen. Bei Bedarf können weitere Erweiterungsmodule über den I²C-Bus hinzugeschaltet werden, und es kann flexibel ein erweiterter Protokollkonverter 1 mit weiteren Anschlußmöglichkeiten geschaffen werden.

Sowohl Grundmodul 20 als auch Erweiterungsmodul 21 können digitale oder analoge Ein- und Ausgänge aufweisen. Diese können für einen direkten Anschluß von weiteren Einrichtungen an den Protokollkonverter 1 vorgesehen sein. In dem gezeigten Beispiel weisen Grundmodul 20 und Erweiterungsmodul 21 jeweils eine digitale Eingangseinrichtung 24 mit acht digitalen Eingängen auf. Die digitalen Eingänge sind beispielsweise zum Erfassen von Betriebszuständen geeignet.

Weiterhin weisen Grundmodul 20 und Erweiterungsmodul 21 jeweils eine analoge Eingangseinrichtung 25 auf. Jede analoge Eingangseinrichtung 25 weist zwei analoge Eingänge zum Anschluß von beispielsweise Meßgeräten wie Temperatursensoren auf. Die analogen Eingänge sind mit Analog/Digital-Wandlern versehen, die eine einfache Meßwerterfassung und eine Übertragung der digitalisierten Meßwerte zu dem Systemrechner 8 ermöglichen. Die Analog/Digital-Wandler haben beispielsweise eine Genauigkeit von 8 Bit.

Grundmodul 20 und Erweiterungsmodul 21 sind jeweils mit einer Ausgabeeinrichtung versehen, die Relaisausgänge zum Schalten von Lasten aufweisen. Die Relaisausgänge können beispielsweise zum direkten Ein- und Ausschalten von Geräten vorgesehen sein.

Das Grundmodul 20 kann weiterhin eine LON-Schnittstelle 27 zum Anschluß eines LON-Bussystems 5 aufweisen, an der die Einrichtungen 2, 3, 4 angeschlossen sind.

Weiterhin kann das Grundmodul 20 eine Optolink-Schnittstelle 28 aufweisen. Diese optische Schnittstelle kann zum störungsfreien Anschluß eines mobilen Systemrechners 8 für Wartung und Diagnose vor Ort vorgesehen sein.

Außer den in Fig. 5 gezeigten Funktionseinheiten kann der Protokollkonverter 1 über Bedien- und Anzeigeelemente wie Betriebs- und Störungsanzeigen verfügen. Weiterhin ist eine entsprechende Spannungsversorgung vorzusehen.

Die in Fig. 5 gezeigte Ausführungsform eines Protokollkonverters 1 ermöglicht einen flexiblen Aufbau. Für kleine Anlagen, die nur wenige direkt an den Protokollkonverter 1 anzuschließende Einrichtungen aufweisen, kann der erfindungsgemäße Protokollkonverter 1 allein aus dem Grundmodul 20 bestehen. Durch den Einsatz von einem oder mehreren Erweiterungsmodulen 21 kann der Protokollkonverter 1 flexibel erweitert werden, und zusätzliche Einrichtungen können auf einfache Weise zur Fernwartung, Parametrisierung und Steuerung an den Protokollkonverter 1 angeschlossen werden. Der Protokollkonverter 1 wird dazu vom Systemrechner 8 wie eine am Bussystem 5 angeschlossene Einrichtung behandelt und kann selbst Empfänger von Nachrichten und Kommandos sein, mit denen die direkt angeschlossenen Geräte abgefragt oder beeinflusst werden können.

## Patentansprüche

1. Vorrichtung, insbesondere zur Parametrierung und Fernüberwachung von Heizungsanlagen, mit
einem Systemrechner (8), der zur Übertragung von Daten nach einem ersten Datenübertragungsprotokoll geeignet ist,
mindestens einer Einrichtung (2, 3, 4), die zur Übertragung von Daten nach einem zweiten Datenübertragungsprotokoll geeignet ist,
einem Protokollkonverter (1), der mit dem Systemrechner (8) verbunden ist und der Daten des ersten Datenübertragungsprotokolls in Daten des zweiten Datenübertragungsprotokolls und umgekehrt konvertiert, und
einem Bussystem (5), an das die Einrichtungen (2, 3, 4) und der Protokollkonverter (1) anschließbar sind.

2. Vorrichtung nach Anspruch 1, wobei die an das Bussystem (5) anschließbaren Einrichtungen (2, 3, 4) Heizungs-, Klima- und/oder Kühlanlagen und/oder Meß- oder Steuereinrichtungen für den Betrieb von Heizungs-, Klimaund/oder Kühlanlagen sind.

3. Vorrichtung nach Anspruch 1 oder 2, wobei das Bussystem (5) ein Haus- oder Feldbus ist und/oder das zweite Datenübertragungsprotokoll ein LON-Protokoll ist.

4. Vorrichtung nach zumindest einem der Ansprüche 1 bis 3, wobei das erste Datenübertragungsprotokoll ein Protokoll auf der Basis des Internet Protocols IP, insbesondere das Simple Network Management Protocol SNMP, das Hypertext Transport Protocol HTTP, das Transport Control Protocol TCP oder das LonWorks Network Protocol, ist.

5. Vorrichtung nach zumindest einem der Ansprüche 1 bis 4, wobei der Protokollkonverter (1) vorbestimmte Daten in vorgegebenen zeitlichen Abständen von den Einrichtungen (2, 3, 4) abfragt, speichert, an den Systemrechner (8) sendet und/oder zur Abfrage vom Systemrechner (8) bereit hält.

6. Vorrichtung nach zumindest einem der Ansprüche 1 bis 5, wobei der Protokollkonverter (1) einen Speicher (6) für die Speicherung der von den Einrichtungen abgefragten Daten aufweist.

7. Vorrichtung nach zumindest einem der Ansprüche 1 bis 6, wobei der Protokollkonverter (1) vom Systemrechner (8) empfangene Daten, die für eine bestimmte Einrichtung (2, 3, 4) bestimmt sind, über das Bussystem (5) an die entsprechende Einrichtung (2, 3, 4) sendet.

8. Vorrichtung nach zumindest einem der Ansprüche 1 bis 7, wobei der Protokollkonverter (1) eine vorbestimmte Verbindung aktiviert, wenn von einer der Einrichtungen (2, 3, 4) eine Störungs- oder Wartungsmeldung vorliegt.

9. Vorrichtung nach zumindest einem der Ansprüche 1 bis 8, wobei der Protokollkonverter (1) eine vorgegebene Nachricht, insbesondere ein Fax, eine Sprachnachricht, eine Email oder eine SMS-Nachricht, versendet, wenn von einer der Einrichtungen (2, 3, 4) eine Störungs- oder Wartungsmeldung vorliegt und die Verbindung zum Systemrechner (8) gestört ist.

10. Vorrichtung nach zumindest einem der Ansprüche 1 bis 9, wobei die Verbindung zwischen dem Protokollkonverter (1) und dem Systemrechner (8) über eine analoge und/oder digitale Telefonverbindung erfolgt und ein analoges Modem, ein GSM-Modem oder ein ISDN-Modem (7, 9) aufweist.

11. Vorrichtung nach Anspruch 10, wobei die Verbindung zwischen dem Protokollkonverter (1) und dem Systemrechner (8) über ein Rückrufverfahren aufgebaut wird.

12. Vorrichtung nach zumindest einem der Ansprüche 1 bis 11, wobei der System rechner (8) in vorgegebenen zeitlichen Abständen eine Verbindung zu dem Protokollkonverter (1) aufbaut und vorbestimmte Daten abfragt, die der Protokollkonverter (1) zuvor von den Einrichtungen (2, 3, 4) abgefragt und zwischengespeichert hat.

13. Vorrichtung nach zumindest einem der Ansprüche 1 bis 12, wobei der Systemrechner (8) eine Verbindung zu dem Protokollkonverter (1) aufbaut und/oder Daten für eine bestimmte Einrichtung (2, 3, 4) an den Protokollkonverter (1) sendet und/oder Daten von einer bestimmten Einrichtung (2, 3, 4) von dem Protokollkonverter (1) empfängt.

14. Vorrichtung nach zumindest einem der Ansprüche 1 bis 13, wobei der Systemrechner (8) eine Datenbank (10) aufweist, die die Konfigurations-, Inbetriebnahme-, Wartungs- und/oder Betriebsdaten von Einrichtungen (2, 3, 4) und/oder dem Protokollkonverter (1), insbesondere Störungs- und Wartungsmeldungen, enthält.

15. Vorrichtung nach Anspruch 14, wobei der Systemrechner einen Internetund/oder WAP-Server zum Zugriff auf die Datenbank (10) aufweist.

16. Vorrichtung nach zumindest einem der Ansprüche 1 bis 15, wobei der Systemrechner (8) eine vorbestimmte Nachricht, insbesondere ein Fax, eine Sprachnachricht, eine Email oder eine SMS-Nachricht, versendet, wenn von einer der Einrichtungen (2, 3, 4) eine bestimmte Störungs- oder Wartungsmeldung vorliegt.

17. Vorrichtung nach zumindest einem der Ansprüche 1 bis 16, wobei mehrere Systemrechner (8, 11) Verbindungen zu Protokollkonvertern (1) aufbauen und/oder Daten von den Protokollkonvertern (1) empfangen und/oder Daten an die Protokollkonverter (1) senden, wobei die Systemrechner (8, 11) über das Internet miteinander verbindbar sind.

18. Vorrichtung nach Anspruch 17, wobei einer der Systemrechner (8) eine zentrale Datenbank (10) aufweist, an die die anderen Systemrechner (11) Datenänderungen melden und/oder mit der die Datenbanken (12) der anderen Systemrechner (11) abgeglichen werden.

19. Verfahren, insbesondere zur Parametrierung und Fernüberwachung von Heizungsanlagen, mit den folgenden Schritten:
Übertragung von Daten nach einem ersten Datenübertragungsprotokoll zwischen einem Systemrechner (8) und einem Protokollkonverter (1), Konvertierung der Daten des ersten Datenübertragungsprotokolls in Daten eines zweiten Datenübertragungsprotokolls und umgekehrt in dem Protokollkonverter (1), und
Übertragung von Daten nach dem zweiten Datenübertragungsprotokoll zwischen dem Protokollkonverter (1) und mindestens einer Einrichtung (2, 3, 4).
